# EUROPÄISCHE PATENTSCHRIFT

(11) **EP 0 847 584 B1**
(45) Veröffentlichungstag und Bekanntmachung des Hinweises auf die Patenterteilung: **24.11.1999**
(21) Anmeldenummer: 96930150.6
(22) Anmeldetag: 02.09.1996
(51) Int. Cl.: G21C 9/004

(54) **VORRICHTUNG UND VERFAHREN ZUR INERTISIERUNG UND ZUM VENTING DER CONTAINMENT-ATMOSPHÄRE IN EINEM KERNKRAFTWERK**
DEVICE AND METHOD FOR INERTING AND VENTING THE ATMOSPHERE IN THE CONTAINMENT VESSEL OF A NUCLEAR-POWER STATION
DISPOSITIF ET PROCEDE DESTINES A RENDRE INERTE ET A PURGER L'ATMOSPHERE DE L'ENCEINTE DE CONFINEMENT D'UNE CENTRALE NUCLEAIRE

(30) Priorität: 01.09.1995 DE 19532366
(43) Veröffentlichungstag der Anmeldung: 17.06.1998
(73) Patentinhaber: SIEMENS AKTIENGESELLSCHAFT, 80333 München (DE)
(72) Erfinder: ECKARDT, Bernd, D-63486 Bruchköbel (DE)
(86) Internationale Anmeldenummer: EP9603844
(87) Internationale Veröffentlichungsnummer: WO9709722

(56) Entgegenhaltungen:
- EP-A- 0 285 845
- DE-A- 3 637 795
- DE-C- 4 421 601
- GB-A- 2 260 917
- US-A- 3 999 968
- US-A- 5 487 783
- PATENT ABSTRACTS OF JAPAN Bd. 017, Nr. 586 (P-1633) 26 Oktober 1993 & JP,A,05 172980 (TOSHIBA CORP) 13 Juli 1993
- PATENT ABSTRACTS OF JAPAN Bd. 017, Nr. 087 (P-1491) 22 Februar 1993 & JP,A,04 286994 (HITACHI LTD) 12 Oktober 1992
- DATABASE WPI Week 8624 Derwent Publications Ltd., London, GB; AN 86-153033 XP002016783 & JP,A,61 086 680 (HITACHI) , 2.Mai 1986
- PATENT ABSTRACTS OF JAPAN Bd. 95, Nr. 004 & JP,A,07 104087 (TOSHIBA CORP) 21 April 1995

## Beschreibung

Die Erfindung betrifft eine Vorrichtung zur Inertisierung und zum Venting der Containment-Atmosphare in einem Kernkraftwerk. Sie bezieht sich weiter auf ein Verfahren zum Betreiben einer derartigen Vorrichtung.

In einem Kernkraftwerk muß bei Stör- oder Unfallsituationen, bei denen beispielsweise aufgrund von Kernaufheizung eine Oxidation von Zirkonium auftreten kann, mit der Bildung und Freisetzung von Wasserstoffgas innerhalb des den Reaktorkern umschließenden Sicherheitsbehälters oder Containments gerechnet werden. Dadurch können innerhalb des Containments explosive Gasgemische entstehen.

Zur Verhinderung der Bildung derartiger explosiver Gasgemische im Containment eines Kernkraftwerks werden verschiedene Einrichtungen oder Verfahren diskutiert. Hierzu gehören beispielsweise Einrichtungen wie katalytische Rekombinatoren, katalytisch und elektrisch betriebene Zündeinrichtungen oder die Kombination der beiden vorgenannten Einrichtungen sowie Verfahren einer permanenten oder einer nachträglichen Inertisierung des Containments.

Zur Inertisierung eines Kernkraftwerks-Containments kann diesem ein nicht reaktives Gas, wie beispielsweise Stickstoff (N₂) oder Kohlendioxid (CO₂), als Inertisierungsmittel zugeführt. In einer Variante kann zur Inertisierung eine Flüssiggaseinspeisung über verzweigte Düsensysteme oder konventionelle Gaseinspeisesysteme mit integrierter Ölbrenner- oder Gasbrenner-Verdampferanlage erfolgen. Andere Varianten basieren auf einer Flüssiggaseinspeisung, wobei wegen fehlender Verdampfungsenergie der Atmosphäre eines Containments auch eine Einspeisung in einen Wassersumpf innerhalb des Containments vorgesehen ist. Eine Vorrichtung zur Inertisierung der Atmosphäre in einem Kernkraftwerks-Containment ist beispielsweise aus der Deutschen Patentschrift DE 44 21 601 C1 bekannt.

Eine Zuführung von Inertisierungsmittel in das Containment kann eine Druckerhöhung innerhalb des Containments zur Folge haben. Eine solche Druckerhöhung kann auch in einem bereits vorinertisierten Containment, insbesondere hoher spezifischer Zr-Masse und kleinem Containment-Volumen auftreten. Dies wiederum erfordert möglicherweise eine Druckentlastung des Containments durch Ablassen von Containment-Atmosphäre (Venting). In der Containment-Atmosphäre ist jedoch üblicherweise radioaktives Material, wie beispielsweise Edelgase, Jod oder Aerosol, enthalten, das bei einem Venting in die Umgebung des Kernkraftwerks gelangen könnte. Eine Anwendung dieses Prinzips mit einem Venting der Containment-Atmosphäre eines Kernkraftwerks im Falle einer Störung wird daher wegen dieses in der Containment-Atmosphäre enthaltenen Materials nicht in Betracht gezogen.

Der Erfindung liegt daher die Aufgabe zugrunde, eine Vorrichtung anzugeben, mit der eine Inertisierung und ein Venting der Containment-Atmosphäre eines Kernkraftwerks sicher und ohne Belastung der Umgebung des Kernkraftwerks durchführbar ist. Weiterhin soll ein besonders geeignetes Verfahren zum Betreiben einer derartigen Vorrichtung angegeben werden.

Diese Aufgabe wird erfindungsgemäß gelöst durch eine reversible Aktivitätsrückhalteeinrichtung, über die eine an das Containment angeschlossene Zuführungsleitung für ein Inertisierungsmittel und eine an das Containment angeschlossene Ablaßleitung für Containment-Atmosphäre gemeinsam geführt sind, oder die in eine an das Containment angeschlossene Leitung zum Zuführen eines Inertisierungsmittels und zum Ablassen von Containment-Atmosphäre geschaltet ist.

Der Einsatz einer Aktivitatsrückhaltung in einem Kernkraftwerk ist zwar beispielsweise aus der Deutschen Offenlegungsschrift DE 36 37 795 Al bekannt. Diese ist aber ausschließlich für eine Druckentlastung der Sicherheitshülle des Kernkraftwerks vorgesehen. Aus dem Containment abgelassene Containment-Atmosphare durchströmt bei beiden Alternativen die Aktivitätsrückhalteeinrichtung. In der Containment-Atmosphäre enthaltenes radioaktives Material, wie beispielsweise Edelgase, Jod oder Aerosol, wird dabei an innerhalb der Aktivitätsrückhalteeinrichtung vorgesehenem Adsorptionsmaterial zurückgehalten und kurzzeitig gespeichert. Nach einer derartigen Beladung des Adsorptionsmaterials und vor einem Durchbruch des radioaktiven Materials, d.h. vor einer Freisetzung des Materials an die Umgebungsluft, wird der Betriebsmodus der Aktivitätsrückhalteeinrichtung derart geändert, daß diese nunmehr in entgegengesetzter Richtung von Inertisierungsmittel durchströmt wird. Dabei wird das zurückgehaltene radioaktive Material vom Adsorptionsmaterial gelöst und mit dem Inertisierungsmittel zurück in das Containment gespült. Somit ist eine Inertisierung der Containment-Atmosphäre oder Erhaltung der Inertisierung ermöglicht, wobei gleichzeitig eine Druckentlastung des Containments gewährleistet ist. Dabei ist zu jeder Zeit eine Freisetzung radioaktiven Materials an die Umgebung sicher vermieden. Zudem wird durch die Verwendung der reversiblen Aktivitätsrückhalteeinrichtung zusätzlicher Abfall, beispielsweise in Form verstopfter Filterelemente, vermieden. Das Inertisierungsmittel kann dabei beispielsweise Stickstoff (N₂), CO₂, Dampf oder auch ein anderes nicht oxidierend wirkendes Gas sein.

Die reversible Aktivitätsrückhalteeinrichtung, über die eine an das Containment angeschlossene Zuführungsleitung für ein Inertisierungsmittel und eine an das Containment angeschlossene Ablaßleitung für Containment-Atmosphäre gemeinsam geführt sind, umfaßt dabei vorteilhafterweise ein um eine Achse rotierbar gelagertes Filterelement. Eine derartige, in der Art eines Regenerationsrades ausgebildete Aktivitänsrückhalteeinrichtung kann in kontinuierlicher Regeneration betrieben werden. Die Ablaßleitung und die Zuführungsleitunc sind dabei über räumlich verschiedene Bereiche der Aktivitätsrückhalteeinrichtung geführt, wobei zur Abdichtung der in der Ablaßleitung und in der Zuführungsleitung geführten Gasströme gegeneinander zweckmäßigerweise aktivitätsbeständige und unbrennbare Dichtmaterialien gewählt werden. Durch eine Rotation der Aktivitätsrückhalteeinrichtung ist somit erreicht, daß jeder Teilbereich der Aktivitätsrückhalteeinrichtung wechselweise durch abgelassene Containment-Atmosphäre mit radioaktivem Material beladen und durch ihn in Gegenrichtung durchströmendes Inertisierungsmittel regeneriert wird.

Als ein für eine Edelgasrückhaltung besonders geeignetes Adsorptionsmaterial weist die Aktivitätsrückhalteeinrichtung vorteilhafterweise Aktivkohle, ein Molekularsieb und/oder Zeolith auf. Das Adsorptionsmaterial weist dabei zweckmäßigerweise eine innere Austauschoberfläche von mindestens 1000 m²/m³ auf.

In Strömungsrichtung der Containment-Atmosphäre ist der Aktivitätsrückhalteeinrichtung zweckmäßigerweise eine Abscheideeinrichtung für Aerosole und/oder Jodsorbentien vor- oder nachgeschaltet.

Um die Regeneration des Adsorptionsmaterials besonders zu unterstützen und dadurch eine besonders lange Lebensdauer für die Aktivitätsrückhalteeinrichtung zu erreichen, ist dieser in Strömungsrichtung des Inertisierungsmittels zweckmäßigerweise ein Überhitzer vorgeschaltet. Dieser kann beispielsweise ein Wasserenergiespeicher oder auch ein Hochtemperaturtrockenspeicher sein. Es sind aber auch andere Heizeinrichtungen oder Evakuierungseinrichtungen denkbar. Durch eine somit erreichbare Überhitzung des Inertisierungsmaterials kann zudem sichergestellt werden, daß ausschließlich trockenes Inertisierungsmittel die Aktivitätsrückhalteeinrichtung durchströmt. Derartiges trockenes Inertisierungsmittel wirkt sich besonders günstig auf eine Regeneration der Aktivitätsrückhalteeinrichtung aus. Vorteilhafterweise ist weiterhin eine Steuereinrichtung zum Einstellen der Temperatur des Inertisierungsmittels vor dessen Eintritt in die Aktivitätsrückhalteeinrichtung vorgesehen.

Um eine Drucküberhöhung im Containment besonders wirkungsvoll zu vermeiden, enthält das Inertisierungsmittel zweckmäßigerweise Wasserdampf. Dem Containment zugeführter, überhitzter Wasserdampf kondensiert innerhalb des Containments. Diese Kondensation führt zu einem Druckabbau innerhalb des Containments. Insbesondere in Verbindung mit einer vorteilhafterweise zusätzlich vorgesehenen, an die Ablaßleitung angeschlossenen Absaugeeinrichtung ist somit eine permanente Aufrechterhaltung eines Unterdrucks im Containment erreichbar. Dadurch ist eine Freisetzung von radioaktivem Material an die Umgebung besonders sicher vermieden. Eine derartige Absaugeeinrichtung ist somit besonders wirkungsvoll bei einem undichten Containment mit Leckage einsetzbar. Das Inertisierungsmittel kann dabei ausschließlich aus Wasserdampf bestehen oder auch neben Wasserdampf anderes Material, beispielsweise Stickstoff (N₂) oder Kohlendioxid (CO₂), enthalten.

Um einen Abschluß des Containments gegen die Umwelt zu erreichen und somit eine Freisetzung von radioaktivem Material an die Umwelt sicher zu vermeiden, ist zweckmäßigerweise in die Zuführungsleitung eine selbstschließende Absperrarmatur geschaltet. Eine derartige selbstschließende Absperrarmatur kann beispielsweise durch Feder- oder Gewichtskraft verschlossen sein. Bei der Zuführung des Inertisierungsmittels wird die Armatur durch den gegen die Feder- oder Gewichtskraft wirkenden Druck des Inertisierungsmittels geöffnet, so daß ein Einströmen des Inertisierungsmittels in das Containment ermöglicht ist.

Bezüglich des Verfahrens zur Inertisierung und zum Venting der Containment-Atmosphäre in einem Kernkraftwerk wird die genannte Aufgabe erfindungsgemäß gelöst, indem eine reversible Aktivitätsrückhalteeinrichtung wechselweise von dem Containment zuzuführendem Inertisierungsmittel und von aus dem Containment abgelassener Containment-Atmosphäre durchströmt wird.

In vorteilhafter Weiterbildung wird in der abgelassenen Containment-Atmosphäre enthaltenes radioaktives Material in der Aktivitätsrückhalteeinrichtung abgeschieden und bei einer darauf folgenden Durchströmung der Aktivitätsrückhalteeinrichtung durch Inertisierungsmittel in das Containment zurückbefördert. Die Aktivitätsrückhalteeinrichtung kann dabei kontinuierlich, beispielsweise nach dem Regenerationsradprinzip, oder auch diskontinuierlich, beispielsweise mittels Umschaltung und Gegenstromregeneration, erfolgen.

Um eine besonders effektive Regeneration der Aktivitätsrückhalteeinrichtung zu gewährleisten, wird die Temperatur des Inertisierungsmittels vor Eintritt in die Aktivitätsrückhalteeinrichtung geregelt. Besonders vorteilhafterweise wird das Inertisierungsmittel dabei zu dessen Trocknung überhitzt.

Die mit der Erfindung erzielten Vorteile bestehen insbesondere darin, daß durch die reversible Aktivitätsrückhalteeinrichtung eine Zuführung von Inertisierungsmittel in das Containment eines Kernkraftwerks jederzeit möglich ist, ohne daß ein unzulässiger Druckaufbau im Containment stattfindet. Somit ist eine derartige Inertisierung des Containments nicht mit den üblicherweise mit einer Druckerhöhung im Containment verbundenen Nachteilen behaftet. Eine derartige Inertisierunc ist besonders flexibel einsetzbar und kann auch prophylaktisch erfolgen. Daher ist nicht nur bei Stör- oder Unfallsituationen, sondern auch bei geringfügigen Abweichungen des Kernkraftwerkszustandes von einem Normalzustand die Sicherheit der Gesamtanlage deutlich erhöht.

Ausführungsbeispiele der Erfindung werden anhand einer Zeichnung näher erläutert. Darin zeigen:
- Figur 1: eine Vorrichtung zur Inertisierung und zum Venting der Containment-Atmosphäre in einem Kernkraftwerk mit einer Aktivitätsrückhalteeinrichtung, und
- Figur 2: eine alternative Vorrichtung zur Inertisierung und zum Venting der Containment-Atmosphäre in einem Kernkraftwerk mit einer rotierbaren Aktivitätsrückhalteeinrichtung.
Gleiche Teile sind in beiden Figuren mit denselben Bezugszeichen versehen.

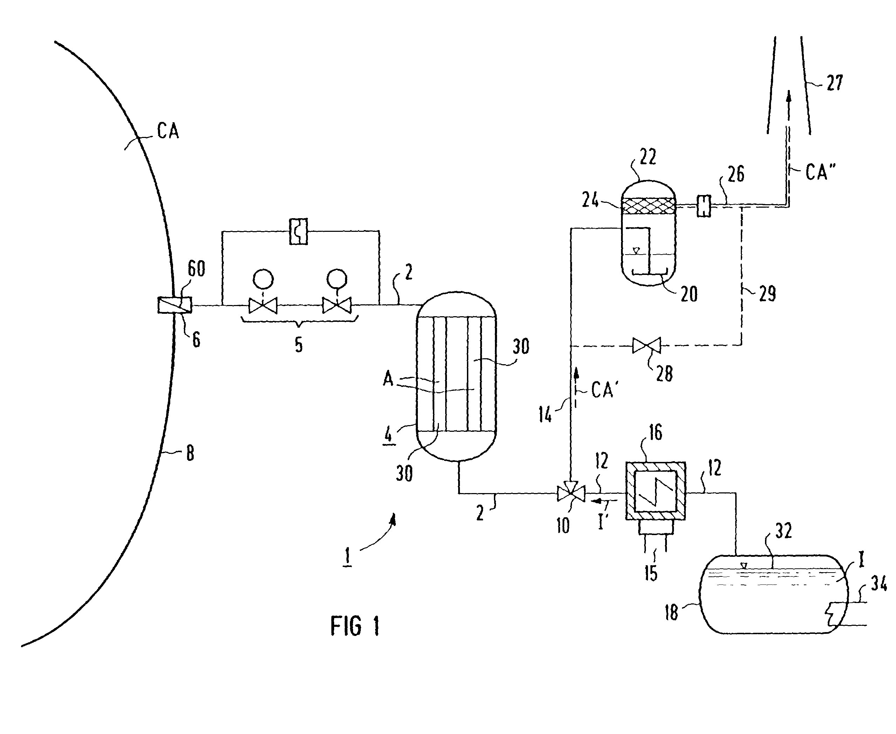

Die Vorrichtung 1 zur Inertisierung und zum Venting der Containment-Atmosphäre CA in einem nicht näher dargestellten Kernkraftwerk gemäß Figur 1 umfaßt eine Leitung 2, in die eine Aktivitätsrückhalteeinrichtung 4 geschaltet ist. Die mit einer Ventilanordnung 5 absperrbare Leitung 2 ist einerseits über eine Durchführung 6 an das Innere eines Reaktorsicherheitsbehälters oder Containments 8 des Kernkraftwerks und andererseits an eine Umlenkeinrichtung 10 in Form eines Drei-Wege-Ventils angeschlossen. In der Umlenkeinrichtung 10 verzweigt sich die Leitung 2 in eine Zuführungsleitung 12 für ein Inertisierungsmittel I und in eine Ablaßleitung 14 für Containment-Atmosphäre CA.

Die Zuführungsleitung 12, in die ein mit einer Steuerungseinrichtung 15 zur Temperaturregelung versehener Wärmetauscher 16 als Überhitzer geschaltet ist, ist an einen Lagerbehälter 18 für das Inertisierungsmittel I angeschlossen. Die Ablaßleitung 14 mündet mit ihrem als Venturiwäscher ausgebildeten Ende 20 in einen als Jod- und/oder Aerosolabscheideeinrichtung ausgebildeten Behälter 22, der in seinem oberen Bereich ein Filterelement 24 aufweist. Über das Filterelement 24 ist an den Behälter 22 ausgangsseitig eine Abgasleitung 26 angeschlossen, die - vorteilhafterweise über eine (nicht dargestellte) - Gasabsaugevorrichtung in einen Kamin 27 mündet. In einer Parallelschaltung zum Behälter 22 ist die Ablaßleitung 14 zudem über eine mit einem Ventil 28 absperrbare Umgehungsleitung 29 mit der Abgasleitung 26 verbunden.

Die Aktivitätsrückhalteeinrichtung 4 weist eine Anzahl von Filtereinsätzen 30 auf, von denen in Figur 1 zwei gezeigt sind. Jeder Filtereinsatz 30 weist dabei an seiner Oberfläche Adsorptionsmaterial A auf.

Im Fall einer erforderlichen Inertisierung der Containment-Atmosphäre CA wird zunächst das Inertisierungsmittel I, das im Lagerbehälter 18 bis zur Höhe eines Pegels 32 in flüssiger Form vorliegt, mittels einer Heizeinrichtung 34 teilweise verdampft. Beim Inertisierungsmittel I kann es sich dabei beispielsweise um Stickstoff (N₂), Kohlendioxid (CO₂), Wasser oder um eine Mischung von diesen handeln. Das verdampfte Inertisierungsmittel I strömt über die Zuführungsleitung 12 der Umlenkeinrichtung 10 zu, wobei es den Wärmetauscher 16 passiert. Im Wärmetauscher 16 wird das Inertisierungsmittel I überhitzt. Der Wärmetauscher 16 kann ein aktiv beheiztes Heizelement oder auch ein permanent aufgeheiztes Wärmeenergiereservoir (Hochtemperatur-Trockenspeicher) sein

Zum Zuführen von somit überhitztem Inertisierungsmittel I' in das Innere des Containments 8 ist über die Umlenkeinrichtung 10 der Durchgang der Zuführungsleitung 12 zur Leitunc 2 geöffnet, so daß das überhitzte Inertisierungsmittel I' über die Leitung 2 der Aktivitätsrückhalteeinrichtung 4 zugeführt wird. In der Aktivitätsrückhalteeinrichtung 4 durchströmt das überhitzte Inertisierungsmittel I' die Filtereinsätze 30 und gelangt dann über die Leitung 2 und die Durchführung 6 in das Innere des Containments 8, wo es zur Inertisierung der Containment-Atmosphäre CA beiträgt.

Nachdem dem Inneren des Containments 8 eine derartige Menge an überhitztem Inertisierungsmittel I' zugeführt wurde, daß ein Druckabbau erforderlich ist, wird über die Umlenkeinrichtung 10 die Verbindung zwischen der Zuführungsleitung 12 und der Leitung 2 geschlossen und die Verbindung zwischen der Ablaßleitung 14 und der Leitung 2 geöffnet. In dieser Stellung der Umlenkeinrichtung 10 ist ein Venting der Containment-Atmosphäre CA, d.h. ein Ablassen der Containment-Atmosphäre CA, möglich. Dabei durchströmt aus dem Containment 8 abgelassene Containment-Atmosphäre CA die Aktivitätsrückhalteeinrichtung 4 und deren Filtereinsätze 30. In der Containment-Atmosphäre CA enthaltenes radioaktives Material, wie beispielsweise Edelgase, wird durch Adsorption an den Filtereinsätzen 30 zurückgehalten. Die gefilterte Containment-Atmosphäre CA' strömt nun - wie durch den Pfeil angedeutet - dem als Jod- und Aerosolabscheideeinrichtung ausgebildeten Behälter 22 zu. Durch das Zusammenwirken des als Venturiwäscher ausgebildeten Endes 20 der Leitung 14 und des Filterelementes 24 werden Jod und/oder Aerosole aus der Contaiment-Atmosphäre CA' entfernt. Die somit weiterhin gereinigte Containment-Atmosphäre CA" kann dann über den Kamin 27 an die Umgebung freigesetzt werden.

Nachdem in derartiger Weise ein ausreichender Druckausgleich im Inneren des Containments 8 erreicht wurde, wird diesem in einem weiteren Schritt erneut Inertisierungsmittel I zugeführt. Dazu wird mittels der Umlenkeinrichtung 10 die Verbindung der Leitung 2 zur Ablaßleitung 14 geschlossen und gleichzeitig die Verbindung der Leitung 2 zur Zuführungsleitung 12 geöffnet. Somit strömt nun erneut überhitztes Inertisierungsmittel I' dem Inneren des Containments 8 zu und passiert dabei wiederum die Aktivitätsrückhalteeinrichtung 4 und deren Filtereinsätze 30. Beim Durchströmen der Filtereinsätze 30 löst das Inertisierungsmittel I' das an diesen absorbierte radioaktive Material und fördert es in das Innere des Containments 8 zurück. Durch einen derartigen wechselweisen und daher diskontinuierlichen Betrieb der Vorrichtung 1 ist eine Freisetzung von radioaktivem Material auch bei einem Venting des Containments 8 sicher vermieden.

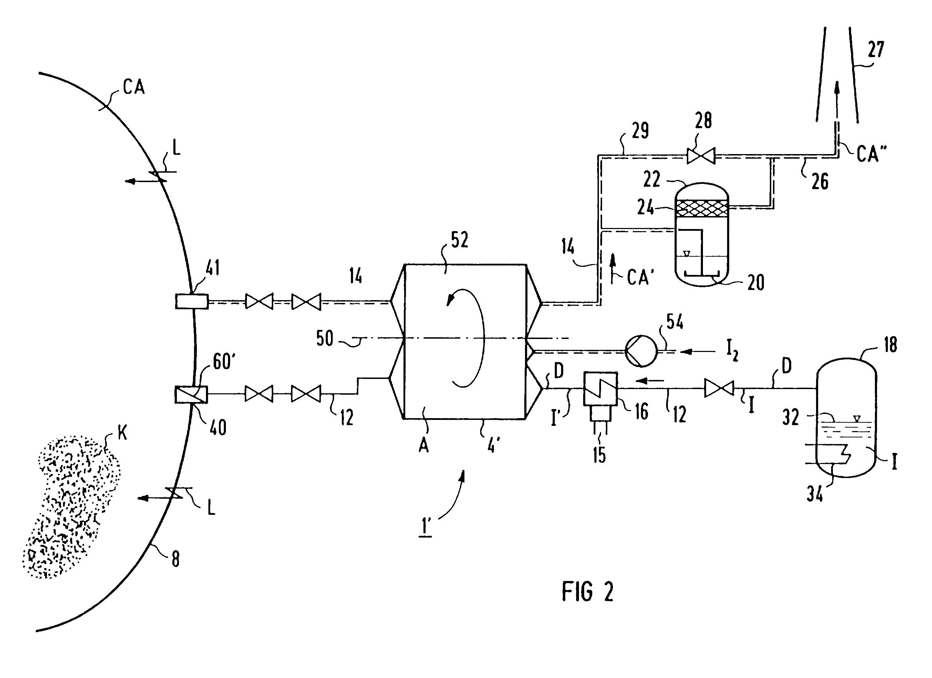

Bei der alternativen Vorrichtung 1' gemäß Figur 2 zur Inertisierung und zum Venting der Containment-Atmosphäre CA sind die Zuführungsleitung 12 für das Inertisierungsmittel I sowie die Ablaßleitung 14 für Containment-Atmosphäre CA jeweils über eine Durchführung 40 bzw. 41 an das Innere des Containments 8 angeschlossen. Auch in dieser Ausführungsform ist die Zuführungsleitung 12, in die der Wärmetauscher 16 als Überhitzer geschaltet ist, an den Lagerbehälter 18 für das Inertisierungsmittel I angeschlossen. Die Ablaßleitung 14 ist über den als Jod- und Aerosolabscheidegefäß ausgebildeten Behälter 22 an den Kamin 27 angeschlossen.

Die Zuführungsleitung 12 und die Ablaßleitung 14 sind in diesem Ausführungsbeispiel über eine gemeinsame reversible Aktivitätsrückhalteeinrichtung 4' geführt. Die Aktivitätsrückhalteeinrichtung 4' ist dabei als Regenerationsrad ausgebildet. Sie umfaßt ein um eine Achse 50 rotierbar gelagertes Filterelement 52, das wiederum ein Adsorptionsmittel A aufweist.

Die Aktivitätsrückhalteeinrichtung 4' ist kontinuierlich betreibbar. Dabei durchströmt aus dem Containment 8 abgelassene Containment-Atmosphäre CA einen sich im Bereich der Ablaßleitung 14 befindenden Teil des Filterelements 52. Nur dieser Teil des Filterelements 52 wird mit in der Containment-Atmosphäre CA enthaltenem radioaktiven Material beladen. Die gefilterte Containment-Atmosphäre CA' strömt anschließend, analog zum Ausführungsbeispiel gemäß Figur 1, dem als Jod- und/oder Aerosolabscheideeinrichtung ausgebildeten Behälter 22 zu.

Durch die Rotation des Filterelements 52 um die Achse 50 wird der mit radioaktivem Material beladene Bereich des Filterelements 52 aus dem Bereich der Ablaßleitung 14 entfernt und durch einen nicht mit radioaktivem Material beladenen Bereich des Filterelements 52 ersetzt. Teilbereiche des Filterelements 52 sind durch aktivitätsbeständiges und unbrennbares Dichtmaterial gegeneinander abgedichtet.

Der mit radioaktivem Material beladene Bereich des Filterelements 52 gelangt aufgrund der Rotation des Filterelements 52 um die Achse 50 in den Bereich der Zuführungsleitung 12 für das Inertisierungsmittel I. In diesem Bereich wird er von im Wärmetauscher 16 überhitztem und dem Containment 8 zuzuführenden Inertisierungsmittel I' durchströmt. Dabei wird adsorbiertes radioaktives Material vom Filterelement 52 gelöst und in das Containment 8 zurückgespült. Somit wird jeder Bereich des Filterelements 52 kontinuierlich mit radioaktivem Material beladen und wieder regeneriert. Die Vorgänge des Beladens und Regenerierens des Filterelements 52 laufen somit in der Aktivitätsrückhaltevorrichtung 4' parallel und gleichzeitig ab, so daß die Aktivitätsrückhalteeinrichtung 4' kontinuierlich betreibbar ist. Dadurch ist ein Aufbau eines Überdrucks im Containment 8 zu jeder Zeit ausgeschlossen, so daß eine derartige Inertisierung des Containments 8 besonders flexibel ist und auch jederzeit prophylaktisch erfolgen kann.

Das im Ausführungsbeispiel gemäß Figur 2 vorgesehene im Lagerbehälter 18 gelagerte Inertisierungsmittel I ist Wasser. Dieses Wasser I wird mittels der Heizeinrichtung 34 ganz oder teilweise verdampft. Über die Zuführungsleitung 12 der Aktivitätsrückhalteeinrichtung 4' zuströmender Wasserdampf D wird im Wärmetauscher 16 überhitzt, so daß eine besonders effektive Regeneration des von ihm durchströmten Teils des Filterelements 52 ermöglicht ist. Der zugeführte Wasserdampf D kondensiert innerhalb des Containments 8. Aus dieser durch den Bereich K dargestellten Kondensation resultiert ein Druckabbau oder Unterdruck innerhalb des Containments 8. Insbesondere in Kombination mit dem Kamin 27 ist auf diese Weise eine permanente Aufrechterhaltung eines Unterdrucks im Inneren des Containments 8 ermöglicht. Durch Aufrechterhaltung eines derartigen Unterdrucks ist auch bei einem undichten Containment 8 oder bei einer Leckage eine Abgabe von radioaktivem Material an die Umwelt sicher vermieden, da Leckagen - wie in Figur 2 durch die Pfeile L angedeutet - ausschließlich in das Containment 8 hineinströmen.

An die Aktivitätsrückhalteeinrichtung 4' kann parallel zur Zuführungsleitung 12 eine weitere Zuführungsleitung 54 zum Zuführen eines weiteren Inertisierungsmittels I₂ angeschlossen sein. Das Inertisierungsmittel I₂ kann dabei Stickstoff (N₂) oder Kohlendioxid (CO₂) sein. Durch diese derartige Anordnung ist eine Regeneration des Filterelements 52 mittels einer Mischung aus Wasserdampf D und Inertgas I₂ möglich.

Jedes Filterelement 30, 52 der Aktivitätsrückhalteeinrichtung 4 bzw. 4' kann vorteilhafterweise Aktivkohle und/oder ein Molekularsieb als Adsorptionsmaterial A aufweisen. Das feinverteilte Adsorptionsmaterial hat dabei eine innere Austauschoberfläche von mindestens 1000 m²/m³. Für eine besonders effektive Regeneration der Filterelemente 30 bzw. 52 ist die Temperatur des zugeführten Inertisierungsmittels I', I₂ regelbar. Eine derartige Temperaturregelung kann beispielsweise durch eine Regelung des Wärmetauschers 16 mittels der Steuereinrichtung 15 oder auch in nicht näher dargestellter Art und Weise durch ein Aufteilen des in der zuführungsleitung 12 geführten Gasstroms in Teilströme erfolgen, von denen lediglich einer über den Wärmetauscher 16 geführt und anschließend den anderen Teilströmen wieder zugemischt wird.

Die Aktivitätsrückhalteeinrichtung 4, 4' ist nach den Ausführungsbeispielen gemäß den Figuren 1 und 2 außerhalb des Containments 8 angeordnet, sie kann alternativ aber auch innerhalb des Containments 8 angeordnet sein.

Um einen zuverlässigen Abschluß des Containments 8 zu gewährleisten und somit eine Abgabe von radioaktivem Material an die Umgebung sicher zu vermeiden, ist die Zuführungsleitung 12 nach ihrer Durchführung 6 bzw. 40 durch das Containment 8 mit einer selbstschließenden Absperrarmatur 60, 60' versehen. Diese wird beispielsweise durch den gegen eine Feder- oder Gewichtskraft wirkenden Einspeisedruck des Inertisierungsmittels I', I₂ geöffnet. Bei einem Ausfall oder einer Beendigung der Zuführung von Inertisierungsmittel I', I₂ wird somit das Containment 8 nach einem "Fail Safe"-Prinzip gegen die Umgebung abgeschlossen.

Mit einer derartigen Vorrichtung 1 oder 1' ist eine Inertisierung der Containment-Atmosphäre CA bei gleichzeitigem Venting jederzeit möglich. Da dabei ein Überdruckaufbau innerhalb des Containments 8 vermieden ist, ist eine derartige Inertisierung jederzeit möglich. Die Inertisierung kann somit nach einem "Blow-down" oder nach anderen Kriterien wie beispielsweise "H₂-Konzentration zu hoch", "Kernfüllstand zu tief", oder auch prophylaktisch erfolgen, da in keinem Fall eine Freisetzung radioaktiven Materials an die Umwelt zu befürchten ist. Zudem ist die Inertisierung der Containment-Atmosphäre CA kurzfristig und auch bei Ausfall wichtiger Systeme (station black out) möglich.

## Patentansprüche

1. Vorrichtung zur Inertisierung und zum Venting der Containment-Atmosphäre (CA) in einem Kernkraftwerk, wobei an das Containment (8) eine Zuführungsleitung (12) für ein Inertisierungsmittel (I) und eine Ablaßleitung (14) für Containment-Atmosphäre (CA) angeschlossen sind, die über eine gemeinsame reversible Aktivitätsrückhalteeinrichtung (4') geführt sind.

2. Vorrichtung nach Anspruch 1,
**dadurch gekennzeichnet**, daß die Aktivitätsrückhalteeinrichtung (4') ein um eine Achse (50) rotierbar gelagertes Filterelement (52) umfaßt.

3. Vorrichtung zur Inertisierung und zum Venting der Containment-Atmosphäre in einem Kernkraftwerk, wobei an das Containment (8) eine Leitung (2) zum Zuführen eines Inertisierungsmittels (I) und zum Ablassen von Containment-Atmosphäre (CA) angeschlossen ist, in die eine reversible Aktivitätsrückhalteeinrichtung (4) geschaltet ist.

4. Vorrichtung nach einem der Ansprüche 1 bis 3,
**dadurch gekennzeichnet**, daß die Aktivitätsrückhalteeinrichtung (4, 4') Aktivkohle und/oder ein Molekularsieb als Adsorptionsmaterial (A) aufweist.

5. Vorrichtung nach einem der Ansprüche 1 bis 4,
**dadurch gekennzeichnet**, daß das Adsorptionsmaterial (A) der Aktivitätsrückhalteeinrichtung (4, 4') eine innere Austauschoberfläche von mindestens 1000 m²/m³ aufweist.

6. Vorrichtung nach einem der Ansprüche 1 bis 5,
**gekennzeichnet durch** eine der Aktivitätsrückhalteeinrichtung (4, 4') in Strömungsrichtung der Containment-Atmosphäre (CA) vor- oder nachgeschaltete Aerosolabscheideeinrichtung (22).

7. Vorrichtung nach einem der Ansprüche 1 bis 6,
**dadurch gekennzeichnet**, daß der Aktivitätsrückhalteeinrichtung (4, 4') in Strömungsrichtung des Inertisierungsmittels (I) ein Überhitzer (16) vorgeschaltet ist.

8. Vorrichtung nach einem der Ansprüche 1 bis 7,
**dadurch gekennzeichnet**, daß eine Steuerungseinrichtung (15) zum Einstellen der Temperatur des Inertisierungsmittels (I') vor Eintritt in die Aktivitätsrückhalteeinrichtung (4, 4') vorgesehen ist.

9. Vorrichtung nach einem der Ansprüche 1 bis 8,
**dadurch gekennzeichnet**, daß das Inertisierungsmittel (I) Wasserdampf (D) enthält.

10. Vorrichtung nach einem der Ansprüche 1 bis 9,
**gekennzeichnet durch** einen an die Ablaßleitung (14) angeschlossenen Kamin (27).

11. Vorrichtung nach einem der Ansprüche 1 bis 10, **gekennzeichnet durch** eine in die Zuführungsleitung (12) geschaltete selbstschließende Absperrarmatur (60, 60').

12. Verfahren zur Inertisierung und zum Venting der Containment-Atmosphäre in einem Kernkraftwerk, bei dem eine reversible Aktivitätsrückhalteeinrichtung (4, 4') wechselweise von einem dem Containment (8) zuzuführenden Inertisierungsmittel (I) und von aus dem Containment (8) abgelassener ContainmentAtmosphäre (CA) durchströmt wird.

13. Verfahren nach Anspruch 12,
**dadurch gekennzeichnet**, daß in der abgelassenen Containment-Atmosphäre (CA) enthaltenes radioaktives Material in der Aktivitätsrückhalteeinrichtung (4, 4') abgeschieden und bei einer darauf folgenden Durchströmung der Aktivitätsrückhalteeinrichtung (4, 4') vom Inertisierungsmittel (I) in das Containment (8) zurückgefördert wird.

14. Verfahren nach Anspruch 12 oder 13,
**dadurch gekennzeichnet**, daß die Temperatur des Inertisierungsmittels (I) geregelt wird.

15. Verfahren nach einem der Ansprüche 12 bis 14,
**dadurch gekennzeichnet**,aß das Inertisierungsmittel (I) überhitzt wird.

## Claims

1. Device for inerting and venting the containment atmosphere (CA) in a nuclear power station, wherein a supply line (12) for an inerting agent (I) and a venting line (14) for containment atmosphere (CA) are connected to the containment (8), which are guided by way of a common reversible activity retaining device (4').

2. Device according to claim 1, characterized in that the activity retaining device (4') comprises a filter element (52) rotatably mounted about an axis (50).

3. Device for inerting and venting the containment atmosphere in a nuclear power station, with a line (2) for supplying an inerting agent (I) and for venting containment atmosphere (CA) being connected to the containment (8), into which line a reversible activity retaining device (4) is connected.

4. Device according to one of claims 1 to 3, characterized in that the activity retaining device (4, 4') has activated carbon and/or a molecular sieve as adsorption material (A).

5. Device according to one of claims 1 to 4, characterized in that the adsorption material (A) of the activity retaining device (4, 4') has an inner exchange surface of at least 1000 m²/m³.

6. Device according to one of claims 1 to 5, characterized by an aerosol-separating device (22) connected upstream or downstream of the activity retaining device (4, 4') in the flow direction of the containment atmosphere (CA).

7. Device according to one of claims 1 to 6, characterized in that a superheater (16) is connected upstream of the activity retaining device (4, 4') in the flow direction of the inerting agent (I).

8. Device according to one of claims 1 to 7, characterized in that a control device (15) for setting the temperature of the inerting agent (I') before entry into the activity retaining device (4, 4') is provided.

9. Device according to one of claims 1 to 8, characterized in that the inerting agent (I) contains water vapour (D).

10. Device according to one of claims 1 to 9, characterized by a chimney (27) connected to the venting line (14).

11. Device according to one of claims 1 to 10, characterized by a self-closing shut-off device (60, 60') connected into the supply line (12).

12. Method for inerting and venting the containment atmosphere in a nuclear power station, where an inerting agent (I) to be supplied to the containment (8) and containment atmosphere (CA) vented from the containment (8) alternately flow through a reversible activity retaining device (4, 4').

13. Method according to claim 12, characterized in that radioactive material contained in the vented containment atmosphere (CA) is deposited in the activity retaining device (4, 4') and with a subsequent flowing of inerting agent (I) through the activity retaining device (4, 4') is conveyed back into the containment (8).

14. Method according to claim 12 or 13, characterized in that the temperature of the inerting agent (I) is controlled.

15. Method according to one of claims 12 to 14, characterized in that the inerting agent (I) is superheated.

## Revendications

1. Dispositif pour rendre inerte et purger l'atmosphère (CA) de l'enceinte de confinement d'une centrale nucléaire, une conduite (12) d'alimentation pour un agent (I) de mise à l'état inerte et une conduite (14) d'évacuation pour l'atmosphère (CA) de l'enceinte de confinement étant raccordées à l'enceinte (8) de confinement, ces conduites passant dans un dispositif (4') commun réversible de retenue de l'activité.

2. Dispositif suivant la revendication 1, **caractérisé** en ce que le dispositif (4') de retenue de l'activité comprend un élément (52) filtrant monté à rotation autour d'un axe (50).

3. Dispositif pour rendre inerte et purger l'atmosphère de l'enceinte de confinement d'une centrale nucléaire, une conduite (2) d'alimentation d'un agent (I) de mise à l'état inerte et d'évacuation de l'atmosphère (CA) de l'enceinte de confinement étant raccordée à l'enceinte (8) de confinement et un dispositif (4) réversible de retenue de l'activité étant monté dans cette conduite.

4. Dispositif suivant l'une des revendications 1 à 3, **caractérisé** en ce que le dispositif (4, 4') de retenue de l'activité comporte comme matériau (A) d'adsorption du charbon actif et/ou un tamis moléculaire.

5. Dispositif suivant l'une des revendications 1 à 4, **caractérisé** en ce que le matériau (A) d'adsorption du dispositif (4, 4') de retenue de l'activité possède une surface d'échange interne d'au moins 1000 m²/m³.

6. Dispositif suivant l'une des revendications 1 à 5, **caractérisé** par un dispositif (22) de séparation d'aérosol, monté en amont ou en aval du dispositif (4, 4') de retenue de l'activité dans le sens d'écoulement de l'atmosphère (CA) de l'enceinte de confinement.

7. Dispositif suivant l'une des revendications 1 à 6, **caractérisé** en ce que le dispositif (4, 4') de retenue de l'activité est précédé d'un surchauffeur (16) dans le sens d'écoulement de l'agent (I) de mise à l'état inerte.

8. Dispositif suivant l'une des revendications 1 à 7, **caractérisé** en ce qu'il est prévu un dispositif (15) de commande pour régler la température de l'agent (I') de mise à l'état inerte avant l'entrée dans le dispositif (4, 4') de retenue de l'activité.

9. Dispositif suivant l'une des revendications 1 à 8, **caractérisé** en ce que l'agent (I) de mise à l'état inerte contient de la vapeur (D) d'eau.

10. Dispositif suivant l'une des revendications 1 à 9, **caractérisé** par une cheminée (27) raccordée à la conduite (14) d'évacuation.

11. Dispositif suivant l'une des revendications 1 à 10, **caractérisé** par un appareil (60, 60') d'isolement à fermeture automatique montée dans la conduite (12) d'alimentation.

12. Procédé pour rendre inerte et purger l'atmosphère de l'enceinte de confinement d'une centrale nucléaire, suivant lequel un dispositif (4, 4') réversible de retenue de l'activité est traversé alternativement par un agent (I) de mise à l'état inerte à apporter à l'enceinte (8) de confinement et par l'atmosphère (CA) évacuée de l'enceinte (8) de confinement.

13. Procédé suivant la revendication 12, **caractérisé** en ce que le matériau radioactif contenu dans l'atmosphère (CA) évacuée de l'enceinte de confinement est séparé dans le dispositif (4, 4') de retenue de l'activité et, lors d'un passage consécutif de l'agent (I) de mise à l'état inerte dans le dispositif (4, 4') de retenue de l'activité, est refoulé dans l'enceinte (8) de confinement.

14. Procédé suivant la revendication 12 ou 13, **caractérisé** en ce que la température de l'agent (I) de mise à l'état inerte est régulée.

15. Procédé suivant l'une des revendications 12 à 14, **caractérisé** en ce que l'agent (I) de mise à l'état inerte est surchauffé.
